# EUROPÄISCHE PATENTSCHRIFT

(11) **EP 4 326 456 B1**
(45) Veröffentlichungstag und Bekanntmachung des Hinweises auf die Patenterteilung: **25.09.2024**
(21) Anmeldenummer: 22724672.5
(22) Anmeldetag: 21.04.2022
(51) Int. Cl.: B21D 17/02, B21D 53/36, F16L 3/02, B21D 22/22, H02G 3/04

(54) **VERFAHREN ZUM HERSTELLEN EINER KABELRINNENKOMPONENTE, SICKENPRESSE ZUM HERSTELLEN EINER SOLCHEN KABELRINNENKOMPONENTE SOWIE DAMIT HERGESTELLTE KABELRINNENKOMPONENTE**
METHOD FOR PRODUCING A CABLE TRAY COMPONENT, BEAD PRESS FOR PRODUCING SUCH A CABLE TRAY COMPONENT AND CABLE TRAY COMPONENT PRODUCED THEREWITH
PROCÉDÉ POUR PRODUIRE UN COMPOSANT DE CHEMIN DE CÂBLES, PRESSE À MOULURE POUR PRODUIRE UN TEL COMPOSANT DE CHEMIN DE CÂBLES ET COMPOSANT DE CHEMIN DE CÂBLES PRODUIT AVEC CELUI-CI

(30) Priorität: 22.04.2021 DE 102021110315
(43) Veröffentlichungstag der Anmeldung: 28.02.2024
(73) Patentinhaber: OBO Bettermann Produktion Deutschland GmbH & Co.KG, 58710 Menden (DE)
(72) Erfinder: GUTT, Wolfgang, 58708 Menden (DE); KNOSSALLA, Robert, 58640 Iserlohn (DE); MENGE, Andreas, 58706 Menden (DE); KUTSCHELIS, Kevin, 58675 Hemer (DE)
(74) Vertreter: Haverkamp Patentanwälte PartG mbB
(86) Internationale Anmeldenummer: PCT/EP2022/060566
(87) Internationale Veröffentlichungsnummer: WO 2022/223700

(56) Entgegenhaltungen:
- DD-A1- 152 075
- DE-A1- 102015 220 231
- DE-A1- 102019 213 531
- DE-U1- 29 822 040
- US-B2- 9 409 222

## Beschreibung

Die Erfindung betrifft ein Verfahren zum Herstellen einer beispielsweise als Kabelrinne oder Kabelrinnendeckel ausgeführten Kabelrinnenkomponente aus Metall mit einer ihrer Längserstreckung folgenden Folge von Sicken, die durch einen Prägevorgang in das zum Ausbilden der Kabelrinnenkomponente verwendete Werkstück eingeprägt werden, wobei das Werkstück für den Vorgang des Sickenprägens angrenzend oder im Übergang zu einer zu erstellenden Sicke in einem Niederhalter eingespannt wird.

Kabelrinnenkomponenten sind beispielsweise Kabelrinnen und Kabelrinnendeckel. Derartige Kabelrinnen werden zum Aufbau eines Kabeltragsystems miteinander verbunden und dienen zur Aufnahme insbesondere von Kabeln, wobei es sich hierbei um elektrische Kabel oder auch um Glasfaserkabel handeln kann. Die Kabelrinnen verfügen über einen Boden und zwei der Längserstreckung der Kabelrinne folgende, daran angeformte Seitenholme. Da man bestrebt ist, die Kabelrinnen möglichst leichtgewichtig auszuführen, werden hierfür dünnwandige Blechplatinen als Werkstücke verwendet, um aus diesen eine Kabelrinne zu fertigen, typischerweise durch Stanz-/Biegeprozesse. Damit eine solche Kabelrinne den Gewichtsbelastungen standhält, ist der Boden durch Quersicken, mitunter auch durch Längssicken, strukturiert. Die Querrippen erstrecken sich quer zur Längserstreckung einer solchen Kabelrinne. Diese erstrecken sich über im Wesentlichen die gesamte Breite des Bodens und enden typischerweise mit einem geringen Abstand vor den Seitenholmen. Die Quersicken werden durch eine Sickenpresse in den für den späteren Boden der Kabelrinne vorgesehenen Flächenbereich einer Platine - dem Werkstück - eingeprägt, typischerweise mit einer Prägerichtung, die in Bezug auf das Aufnahmevolumen der auszubildenden Kabelrinne nach außen gerichtet ist.

Problematisch bei dem Konzept des Aussteifens einer solchen Kabelrinne mit Quersicken ist, dass durch den Prägeprozess Spannungen in das Material und damit in die Kabelrinne eingebracht werden. Der Einbau dieser Spannungen in die Kabelrinne führt dazu, dass diese zu Verwindungen (Verdrehungen) neigt. Dieses ist für eine Handhabung derartiger Rinner, die durchaus Längen von 1 bis 3 m haben können, hinderlich. Dennoch muss ein gewisser Grad an Verwindungsbereitschaft einer solchen Kabelrinne in Kauf genommen werden, wenn beispielsweise zur Verstärkung des Bodens einer solchen Kabelrinnenkomponente Quersicken eingeprägt werden sollen. Um das Ausmaß einer solchen Verwindung nicht zu groß werden zu lassen, wird die Tiefe einer solchen in das Werkstück eingebrachten Sicke kontrolliert, und zwar dergestalt, dass diese ein gewisses Maß nicht überschreitet. Typisch sind Sickentiefen von etwa 0,6 bis 1,0 mm, wenn ungelocht, und, wenn gelocht, 2,5 bis 2,8 mm. Die vorstehende geschilderte Verwindungsanfälligkeit von derartigen Kabelrinnen stellt sich vor allem bei solchen Kabelrinnen ein, die aufgrund der für diese vorgesehenen Belastung eine etwas größere Materialstärke aufweisen, beispielsweise 1,0 - 1,2 mm. Eine weitere Möglichkeit, die Verwindungsneigung einer solchen Kabelrinne trotz Einbringens von Quersicken möglichst gering zu halten, ist, dass neben der Vorgabe einer nur geringen Prägetiefe die Anzahl der Sicken gering gehalten wird. Eine verringerte Anzahl an Quersicken reduziert jedoch die Belastbarkeit einer solchen Kabelrinne Eine ähnliche Problematik stellt sich auch bei einem Einbringen von Längssicken, insbesondere wenn diese als Sickenreihe ausgeführt sind.

Aus DD 0 152 075, die die Basis für die Oberbegriffe der Ansprüche 1 und 10 bildet, sind ein Verfahren und eine Vorrichtung zum Sickenprägen in Blechen bekannt. Bei diesem Verfahren wird in einem ersten Schritt mit Abstand zu den eigentlichen zu prägenden Sicken eine Haltesicke in das Werkstück eingeprägt. Die Haltesicken weisen beispielsweise eine dreieckförmige Querschnittsgeometrie auf. Zusammen mit partiellen Niederhaltern dienen die zum Ausbilden der Haltesicke eingesetzten Prägewerkzeugteile zum Einspannen des Werkstückes für die Ausformung der Sicken. Durch die Haltesicken mit den darin eingreifenden Prägewerkzeugen soll ein Nachfließen von Material in Richtung zu der oder den auszuformenden Sicken verhindert sein. Nachteilig ist bei diesem Verfahren jedoch, dass ein aufwendiges Sickenwerkezeug benötigt wird und dass die eine oder mehreren Sicken durch die Haltesicke eingefasst sind. Durch eine solche Sicke werden Spannungen in das Material eingebracht. Dieses ist unerwünscht. In etlichen Anwendungsfällen wird die Ausbildung einer solchen Haltesicke für die spätere Verwendung des mit Sicken versehenen Werkstückes nicht gewünscht.

In DE 36 10 022 A1 sind ein weiteres Verfahren und Vorrichtung zur Herstellung von Sicken in Blechen beschrieben. Bei diesem Stand der Technik wird zur Vermeidung eines Nachfließens von Material bei der Sickenformung eine Sickenpresse verwendet, deren kooperierende Prägewerkzeuge mit einer den Haftreibungskoeffizienten erhöhenden Beschichtung versehen sind. Hierbei kann es sich beispielsweise um Hartstoffpartikel handeln. Zwar kann mit derartigen Prägewerkzeugen die Haftreibung zwischen dem Werkstück und den Niederhaltern erhöht werden. Wenn jedoch Sicken mit einer größeren Kraft ausgeformt werden sollen, reicht eine solche Erhöhung des Reibungskoeffizienten nicht aus, um ein Nachfließen von Material zu verhindern. Überdies setzen sich die Zwischenräume zwischen den Hartstoffpartikeln zu, sodass zur Gewährleistung einer kontinuierlich gleichbleibenden Sickenprägung die Niederhalter der Sickenpresse in kurzen Abständen zu reinigen sind.

Es besteht daher der Wunsch, Kabelrinnenkomponenten zur Verfügung zu haben, die nicht nur verwindungsfrei oder nahezu verwindungsfrei sind, sondern die sich ebenfalls für eine höhere Belastbarkeit eignen, ohne dass hierfür ein Ausgangsmaterial mit einer größeren Materialstärke eingesetzt werden müsste, und die prozesssicher hergestellt werden können

Damit liegt der Erfindung die Aufgabe zugrunde, ein solches Verfahren vorzuschlagen. Ferner liegt der Erfindung die Aufgabe zugrunde, eine zum Herstellen einer solchen Kabelrinnenkomponente geeignete Sickenpresse vorzuschlagen.

Gelöst wird die verfahrensbezogene Aufgabe durch ein eingangs genanntes, gattungsgemäßes Verfahren, mit den Merkmalen des Anspruchs 1 oder des Anspruchs 10.

Die auf die Sickenpresse gerichtete Aufgabe wird erfindungsgemäß durch eine Sickenpresse mit den Merkmalen des Anspruchs 14 oder 15 gelöst.

Gemäß dem ersten verfahrensbezogenen Lösungsvorschlag werden infolge der den umzuformenden Flächenbereich begrenzenden, zumindest quer zur Längserstreckung der Kabelrinnenkomponente für den Vorgang des Sickenprägens in die Oberfläche des Werkstückes eingedrückten Formschlusskante, die eine Einprägung in der Werkstückoberfläche zur Folge hat, im Zuge des Prägens der Sicken in die außerhalb der Einprägung und damit des Formschlusses während des Sickenprägens befindlichen Flächenbereiche des Werkstückes keine, jedenfalls keine nennenswerten Spannungen induziert. Erreicht wird dieses dadurch, dass der Niederhalter, zumindest jedoch einer der miteinander kooperierenden Bestandteile des Niederhalters mit zumindest einer Formschlusskante ausgerüstet ist, die in die Oberfläche des Werkstückes eingedrückt wird. Bei geschlossenem Niederhalter ist damit ein Formschluss zwischen dem Niederhalter und dem Werkstück bereitgestellt, der in radialer Richtung zu der auszubildenden Sicke wirkt, und zwar bevor die Sicke geprägt wird.

Die in Bezug auf eine Sicke im Rahmen dieser Ausführungen angesprochene radiale Richtung ist diejenige, die quer zur Umrissgeometrie der Sicke verläuft.

Gemäß dem zweiten verfahrensbezogenen Lösungsvorschlag wird ein sich in radialer Richtung zu der zu erstellenden Sicke erstreckender, der Umrissgeometrie der zu erstellenden Sicke folgender Abschnitt mit einem Prägewerkzeug als Teil des Niederhalters, typischerweise einem Prägewulst, eine Materialverdrängung bewirkend, umgeformt. Die Materialverdrängung erfolgt in radialer Richtung zu der zu erstellenden Sicke. Damit wird auch bei diesem Verfahren in das Werkstück eine der Umrissgeometrie der Sicke folgenden Einprägung eingebracht. Die für diese Umformung kooperierenden Teile des Niederhalters sind zum Bewirken einer Materialverdrängung in Richtung zu der zu erstellenden Sicke hin so ausgelegt, dass der Prägespalt sich in Richtung zu der zu erstellenden Sicke nach Art eines Trichters vergrößert. Vorzugsweise ist die Ebene des Werkzeugspaltes in Richtung zu der vorgesehenen Ausstellungsrichtung der Sicke geneigt. Bei einer solchen Ausgestaltung ist es prinzipiell nicht erforderlich, dass ein zusätzlicher Stempel im Prägewerkzeug benötigt wird. Das Vorsehen eines solchen Stempels wird man in vielen Fällen dennoch vorsehen, wobei einem solchen Stempel vornehmlich eine richtungsweisende Funktion für die Ausprägungsrichtung der Sicke zu Teil wird. Verfügt eine solche Sickenpresse über einen Stempel, wird bei einer solchen Verfahrensausgestaltung zunächst der Stempel mit Federvorspannung auf die Werkstückoberfläche gebracht, bevor mit den Niederhaltern und ihren Prägewerkzeugen bzw. Prägewerkzeugteilen die eigentliche sickenausbildende Materialausdünnung durch Materialverdrängung vorgenommen wird.

Unabhängig davon, welches Verfahren eingesetzt wird, ermöglicht dieses, dass Quersicken nicht nur in einer dichten Folge in Längserstreckung der Kabelrinnenkomponente und somit auch in engem Abstand zueinander, sondern vor allem auch mit höherer Prägetiefe in den Boden einer solchen, beispielsweise als Kabelrinne ausgeführten Kabelrinnenkomponente eingeprägt werden können. Dieses gilt vor allem auch für Werkstücke zum Herstellen einer solchen Kabelrinnenkomponente, die eine größere Materialstärke aufweisen. Es versteht sich, dass dieses auch für Werkstücke mit relativ geringer Materialstärke von 0,5 mm bis 0,6 mm gilt. Damit kann eine solche Kabelrinnenkomponente allein durch ihre Strukturierung so ausgebildet werden, dass diese signifikant höheren Beanspruchungen genügt. Von Besonderheit ist, dass trotz der Sickenformung keine Spannungen in die Kabelrinnenkomponente eingekoppelt werden und diese daher als zumindest weitestgehend verwindungsfrei angesprochen werden kann. Durch das vorgeschlagene Verfahren ist daher nicht nur der Herstellungsprozess einer solchen Kabelrinne vereinfacht, sondern auch die Anwendung derselben während der Montage vereinfacht.

Gemäß einer Ausgestaltung dieses Verfahrens wird zum Prägen von Sicken benachbart zu der Bewegungsbahn des Prägestempels das Werkstück, in welches eine Sicke eingeprägt werden soll, durch einen Niederhalter gehalten. Ein solcher Niederhalter umfasst zwei gegeneinander verspannbare Halteelemente, typischerweise einen Werkstücktisch, gegen den zum Einklemmen eines Werkstückes ein verstellbarer Niederhalter unter Zwischenschaltung des Werkstückes wirkt. Wenn im Rahmen dieser Ausführungen von einem Niederhalter die Rede ist, befindet sich dieser zumindest beidseitig des Flächenbereiches der einzuprägenden Sicke an denjenigen Seiten der Sicke, die benachbart zur Sicke spannungsfrei gehalten werden sollen. Bei Querrippen sind dieses diejenigen Seiten, die in Längserstreckung einer beispielsweise als Kabelrinne ausgeführten Kabelrinnenkomponente derselben weisen. Bei dem Verfahren wird das Werkstück in dem Niederhalter nicht nur durch einen herkömmlichen Reib- oder Klemmschluss, sondern in einem an die auszubildende Sicke angrenzenden Bereich infolge zumindest einer für den Vorgang des Sickenprägens in die Oberfläche des Werkstückes eingedrückten Formschlusskante formschlüssig gehalten, wobei dieser Formschluss in radialer Richtung zu der auszubildenden Sicke und somit in Querrichtung zu der durch den Prägestempel auf das Werkstück einwirkenden Zugspannung ausgebildet wird. Durch diesen Formschluss ist wirksam verhindert, dass zum Ausformen der Sicke Material aus dem Werkstück in die Sickenbildung einfließt, welches sich aus Blickrichtung der Sicke außerhalb des Formschlusses befindet. Durch diese in die Oberfläche des Werkstückes eingreifende Verkrallung ist eine klare Abgrenzung zwischen dem für die Ausbildung der Sicke umzuformenden Material des Werkstückes und demjenigen, welches durch diesen Umformprozess nicht beeinflusst werden soll, bereitgestellt. Der Formschluss ist typischerweise über die Erstreckung der zu prägenden Sicke durchgängig ausgeführt. Auf diese Weise wird in die Ausprägung der Sicke nur Material aus demjenigen Flächenbereich genutzt und zumindest teilweise plastisch umgeformt, der sich zwischen den Formschlüssen befindet. Dieses ist der Flächenbereich, aus dem die Sicke geformt wird. Damit ist durch eine solche Sickenbildung, selbst wenn in enger Folge vorgenommen in Folge des in Querrichtung zur Längserstreckung der Kabelrinnenkomponente befindlichen ungeprägten Werkstückbereiche möglich. Dass das Material des Werkstückes bei einer solchen Ausformung der Sicke ausgedünnt wird, ist unproblematisch, da die durch die Strukturänderung durch Einprägen der Sicke und die damit bewirkte Versteifung die Materialausdünnung um ein Mehrfaches wettmacht.

Um die erfindungsgemäßen Vorteile zu erzielen, ist es bereits ausreichend, wenn ein Formschluss durch zumindest eine solche Einprägung zwischen dem Niederhalter und dem zur Ausbildung der Sicke vorgesehenen Flächenbereich an einer der beiden Oberflächen des Werkstückes ausgebildet wird. Dieses kann an derjenigen Oberfläche des Werkstückes erfolgen, die im Übergang zu der zu erstellenden Sicke konvex gekrümmt wird. Durch die Einprägung, benachbart zu dem umzuformenden Flächenbereich, ist wirksam verhindert, dass die auf dieser Oberflächenseite des Werkstückes durch den Prägeprozess eingeleitete Zugspannung in den außerhalb der Einprägung befindlichen Flächenbereich des Werkstückes induziert wird. Eine Steigerung dieses Effektes wird erzielt, wenn eine solche Einprägung an beiden Oberflächen des Werkstückes ausgebildet wird. In einem solchen Fall befinden sich diese in Bezug auf die Mittellängsebene des Werkstückes typischerweise einander fluchtend in Bezug auf die Bewegungsrichtung des verstellbaren Niederhalters gegenüberliegend. Möglich ist auch eine Ausgestaltung, bei der mehrere Formschlüsse durch entsprechende Einprägungen in zumindest eine der beiden Oberflächen des Werkstückes eingebracht werden. Ist bei einer solchen Ausgestaltung die Ausbildung eines solchen Formschlusses mit beiden Oberflächen des Werkstückes vorgesehen, können die Formschlusskanten des Niederhalters quer zur Prägerichtung auch versetzt zueinander angeordnet sein, sodass das Werkstück zwischen diesen Formschlüssen labyrinthartig gehalten ist.

Die Eindrücktiefe einer Formschlusskante zum Bewirken des gewünschten Formschlusses braucht nicht besonders hoch zu sein. Durch die Eindringtiefe soll das Werkstück nicht, jedenfalls nicht nennenswert geschwächt werden. In Abhängigkeit von dem Material sowie der Stärke des Werkstückes kann die Eindringtiefe, je nachdem, ob der Formschluss an einer oder an beiden Seiten ausgebildet wird, jeweils bis 20 bis 25% der Materialstärke betragen. Wird ein Formschluss in beiden Seiten des Werkstückes vorgenommen, kann die summierte Eindringtiefe der beiden Formschlusskanten durchaus 35 bis 45% der Materialstärke betragen. Bei einer Materialstärke des Werkstückes von 0,7 mm ist ein für beide Seiten wirkender Formschluss von 0,05 mm bis 0.07 mm, eingedrückt in beide Oberflächen, ausreichend. Ein tieferes Eindrücken des Formschlussmittels ist möglich, wird aber grundsätzlich nicht für erforderlich angesehen.

In einem bevorzugten Ausführungsbeispiel wird ein solcher Formschluss umlaufend um den Flächenbereich des Werkstückes ausgebildet, in den die Sicke eingeprägt wird und nicht lediglich in Richtung der Kabelrinnenkomponente, in der keine Zugspannung eingebaut werden soll, beispielsweise bei einer Kabelrinne in Längserstreckung derselben, wenn es sich bei den einzubringenden Sicken beispielsweise um Quersicken handelt.

In einer Ausgestaltung der Erfindung ist vorgesehen, dass als Formschlusskante eine dem Verlauf der Sicke folgende von der Klemmoberfläche des Niederhalters abragende schmale Rippe mit asymmetrischer Querschnittsfläche dient, wobei der flache Schenkel der Rippe in Richtung zu dem Prägestempel weist. Vorteilhaft bei einer solchen Auslegung ist, dass beim Schließen des Niederhalters zunächst eine Kraftkonzentration auf die Rippe erfolgt, sodass bereits mit relativ geringer Kraft diese in das Material des Werkstückes eingedrückt werden kann, und zwar so weit, dass die daran angrenzenden Oberflächenbereiche des Niederhalters desselben die vorgesehene Klemmkraft auf das Werkstück ausüben können.

Gemäß einer anderen Ausgestaltung ist vorgesehen, dass durch den Niederhalter selbst, und zwar durch das zumindest eine diesem zugeordnete Prägewerkzeug die Einprägung in das Werkstück eingebracht wird. Bei einer solchen Verfahrensausgestaltung ist das Prägewerkzeug zugleich der Niederhalter. Der Prägevorgang wird als Umformvorgang ausgeführt, durch den das Werkstück im Übergang von dem diesbezüglich nicht umgeformten Werkstückbereich zu der zu prägenden Sicke über eine gewisse Erstreckung in Querrichtung zur auszuprägenden Sicke ausgedünnt und damit das Material in Querrichtung zur Sicke zwischen dem Prägewerkzeug gelängt wird, und zwar in Richtung zu der zu erstellenden Sicke hin. Auch bei dieser Ausgestaltung ist das Prägewerkzeug mit einer Formschlusskante ausgestattet. Durch diese ist eine Einprägung und damit ebenfalls ein Formschluss zwischen den in eine Sickenformkavität hinein gelängten Werkstückbereiches gegeben, sodass ein Einbau von Spannungen infolge der Sickenausprägung in die Sickenrandbereiche wirksam verhindert ist. Zu diesem Zweck weist der Niederhalter eines solchen Sickenwerkzeuges zumindest einen zur Werkstückoberseite ausgebildeten Prägewulst auf, der an seiner von der damit zu prägenden Sicke wegweisenden Seite durch die Formschlusskante begrenzt ist. Gemäß einer bevorzugten Ausgestaltung tragen beide miteinander kooperierenden Prägewerkzeuge einen solchen Prägewulst. Die miteinander kooperierenden Prägewerkzeuge zum Bewirken einer solchen Sicke über eine gewisse Strecke in radialer Richtung bezüglich der Sicke erstreckende Materialausdünnung sind dergestalt ausgelegt, dass durch den Prägevorgang die Materialausdünnung mit einer in Ausprägungsrichtung der Sicke weisenden Richtungsvorgabe durchgeführt wird. Diese Maßnahme kann allein durch entsprechende Gestaltung der kooperierenden Prägewerkezeuge durchgeführt werden, sodass allein durch diesen Prozessschritt die Sicke ausgeformt wird. Wie bereits vorstehend angesprochen, kann ein in die Sickenformkavität eingreifender Stempel vorgesehen sein, der auf die Oberfläche des Werkstückbereiches zwischen den Prägewülsten wirkt, um die Ausformrichtung der Sicke zu beeinflussen. Es versteht sich, dass ein solcher Stempel für die Ausprägungsvorgabe auch genutzt werden kann, um zusätzlich zu der vorbeschriebenen Sickenprägung durch den oder die Prägewülste des Prägewerkzeuges auch mit einer Prägung durch einen solchen Stempel kombiniert werden.

Mit den vorbeschriebenen Verfahren lassen sich Kabelrinnenkomponenten, beispielsweise Kabelrinnen, herstellen, die Quersicken im Boden in unmittelbarer Nachbarschaft zueinander aufweisen. Ohne nennenswerte Spannungen in die Kabelrinne einzubringen, können derartige Querrippen sogar eine nennenswerte Verbreiterung ihrer Enden aufweisen, sodass diese in einer Draufsicht eine knochenförmige Umrissgeometrie aufweisen. Die verbreiterten Endabschnitte können aufgrund dieses Herstellungsverfahrens mehr als 50 % breiter ausgeführt werden als die die Enden verbindenden Abschnitte. Dieses ist bemerkenswert, da durch derartige Quersicken eine Versteifung in Quer- und in Längsrichtung der Kabelrinne erfolgt. Dieselben Vorteile ergeben sich auch für den Fall, dass ein Kabelrinnendeckel als Kabelrinnenkomponente durch entsprechende Sicken, beispielsweise Quersicken, versteift werden soll. Kabelrinnendeckel unterliegen in einem höheren Maße der Gefahr einer Verwindung bei Einbau von Spannungen, da die abgekanteten Seitenteile eine gegenüber der Höhe der Holme sehr viel geringere Höhe aufweisen. Eine Versteifung eines solchen Kabelrinnendeckels ist mitunter auch gewünscht, wenn dieser begehbar sein soll.

Aufgrund des vorbeschriebenen Herstellungsverfahrens können die Sicken, insbesondere auch wenn als Quersicken ausgeführt, deutlich tiefer eingeprägt werden, wobei bei ungelochten Sicken Tiefen von 4 bis 5 mm und bei gelochten Sicken von 3 bis 3,5 mm bei einer Dicke des Bleches von beispielsweise 0,7 mm ohne weiteres möglich sind. Diese Angaben sind beispielhaft und nicht beschränkend zu verstehen.

Nachfolgend ist die Erfindung anhand eines Ausführungsbeispiels unter Bezugnahme auf die beigefügten Figuren beschrieben. Es zeigen:
- **Fig. 1:**: Einen Ausschnitt einer perspektivischen Darstellung einer als Kabelrinne ausgeführten Kabelrinnenkomponente,
- **Fig. 2:**: eine Draufsicht auf einen Ausschnitt auf den Boden der Kabelrinnenkomponente der Figur 1,
- **Fig. 3:**: einen Querschnitt durch eine in ihrer Offenstellung gezeigte Sickenpresse gemäß einer ersten Ausgestaltung zum Erzeugen der in Figur 2 gezeigten Quersicken,
- **Fig. 3a:**: eine vergrößerte Detaildarstellung eines Ausschnittes der zusammenwirkenden Niederhalter der Sickenpresse der Figur 3,
- **Fig. 4:**: die Stellung der beweglichen Elemente der Sickenpresse der Figur 3 zum Ende eines Sickenpressvorganges,
- **Fig. 4a:**: eine vergrößerte Detaildarstellung eines Ausschnittes der zusammenwirkenden Niederhalter der Sickenpresse der Figur 4,
- **Fig. 5:**: einen Querschnitt durch eine Sickenpresse gemäß einer weiteren Ausgestaltung zum Erzeugen von in Figur 2 gezeigten Quersicken,
- **Fig. 6:**: eine Detaildarstellung der Sickenpresse der Figur 5 beim Ausformen einer Sicke und
- **Fig. 7:**: einen Querschnitt durch den Boden einer Kabelrinne in einem Ausschnitt mit einer Quersicke, eingeprägt mit der Sickenpresse der Figuren 5 und 6.

Eine Kabelrinne 1, hergestellt aus einem für Kabelrinnen üblicherweise eingesetzten Stahlwerkstoff, umfasst einen Boden 2 und zwei daran angeformte Seitenholme 3, 4. Die Seitenholme 3, 4 verlaufen in Längserstreckung der Kabelrinne 1. In den Boden 2 der Kabelrinne 1 sind eine Vielzahl von nebeneinanderliegenden Bodensicken 5 eingeprägt. Die Form der Bodensicken ist in einer Draufsicht knochenförmig durch die in Längsrichtung der Kabelrinne 1 verdickten Sickenenden. Die Prägerichtung der Bodensicken 5 ist nach außen somit von dem durch den Boden 2 und die Seitenholme 3, 4 eingefassten Rinnenvolumen wegweisend gerichtet. Bei der Kabelrinne 1 sind die quer verlaufenden Bodensicken 5 zu Bodensickengruppen gruppiert. Jede Bodensickengruppe ist durch eine Rinnensektion 6 mit Ausbrechöffnungen 7 getrennt. Dieses wiederholt sich über die Länge der Kabelrinne 1. In jeder Rinnensektion 6 sind mehrere Ausbrechöffnungen 7 in Querrichtung der Kabelrinne 1 angeordnet. Zwischen jeder Rinnensektion 6 mit Ausbrechöffnungen 7 befindet sich eine Rinnensektion mit mehreren Bodensicken 5.

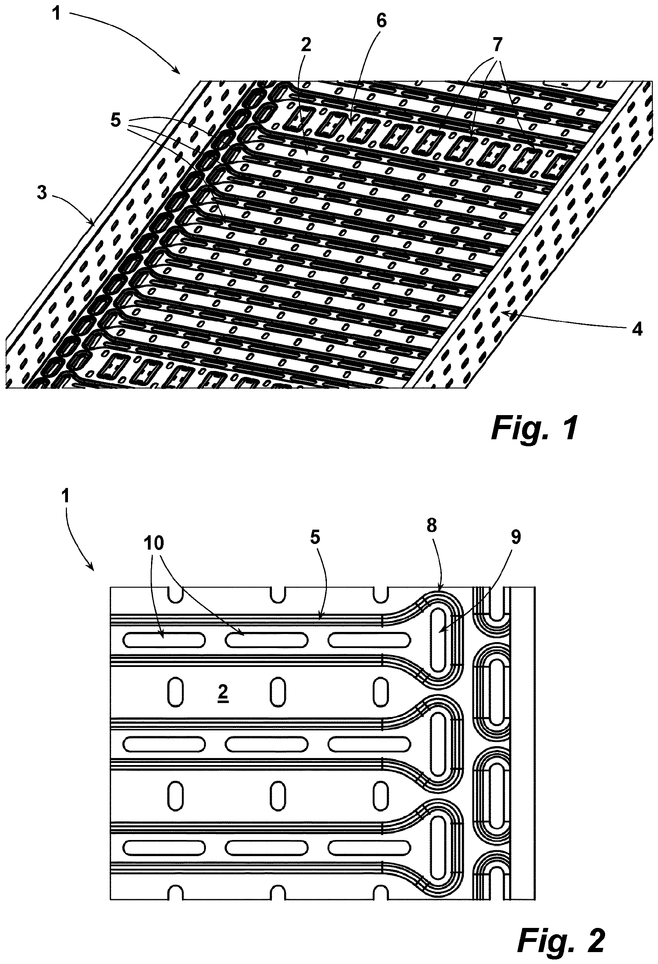

Die Umrissgeometrie der Bodensicken 5 ist deutlicher in der Draufsicht auf einen Ausschnitt des Bodens 2 der Kabelrinne 1 in der Figur 2 zu erkennen. Die Kabelrinne 1 verfügt über eine in den Boden 2 eingebrachte Lochung gemäß einem Raster, wie dieses für Kabelrinnen typisch ist. Die Lochung wird beispielsweise für Befestigungszwecke genutzt. Bei der Kabelrinne 1 weisen die Bodensicken 5, die sich weitestgehend über die gesamte Breite des Bodens 2 erstrecken, verbreiterte Endabschnitte 8 auf. Bei dem dargestellten Ausführungsbeispiel ist die Erstreckung der in Längsrichtung der Kabelrinne 1 weisenden Verbreiterung der Bodensicken 5 in ihren Endabschnitten 8 um etwa 75 % breiter als in dem die Enden verbindenden Abschnitt. Genutzt wird diese Ausgestaltung der Endabschnitte 8, damit in diesen ein in Längserstreckung der Kabelrinne 1 weisendes Langloch aufgenommen sein kann. Die Längserstreckung des Langloches 9 läuft somit quer zur Längserstreckung der in dem die Endabschnitte 8 verbindenden Abschnitt der Bodensicke 5 eingebrachten Langlöcher 10.

Von Besonderheit bei der Kabelrinne 1 ist, dass die Bodensicken 5, wie vor allem aus der Draufsicht der Figur 2 erkennbar, quasi unmittelbar mit ihren Endabschnitten 8 aneinandergrenzen und nur durch einen kurzen Scheitel im Übergang zwischen den Endabschnitten 8 zweier benachbarter Bodensicken 5 voneinander getrennt sind.

Von Besonderheit bei der Kabelrinne ist ferner, dass die große Anzahl an Bodensicken 5 eine enorme Versteifung der Kabelrinne 1 zur Folge hat, weshalb diese aus einer vergleichsweise dünnen Blechplatine mit einer Materialstärke von nur 0,5 - 0,6 mm hergestellt worden ist. Dieses wird nicht nur durch die enge Anordnung der Quersicken 5 in Längserstreckung der Kabelrinne 1 erzielt, sondern auch durch die Tiefe der Einprägung der Sicken. Diese sind mit einer Sickentiefe von 3 - 4 mm geprägt. Dieses für sich genommen ist bereits besonders. Die Kabelrinne 1 besticht jedoch vor allem dadurch, dass trotz der großen Anzahl an quer verlaufenden Bodensicken 5 - sogenannten Quersicken - und der hohen Prägetiefe die Kabelrinne 1 spannungsfrei, jedenfalls so gut wie spannungsfrei ist. Schließlich sind die Bodensicken 5 in den Boden 2 des Werkstückes, aus dem die Kabelrinne 1 gefertigt ist, eingeprägt worden, während die Seitenholme 3, 4 in Längserstreckung der Kabelrinne 1 ungeprägt sind.

Erreicht wird dieses, indem die Bodensicken 5 der Kabelrinne 1 in das Werkstück eingeprägt worden sind, nachdem zwischen dem Niederhalter einer Sickenpresse und dem Werkstück benachbart zu dem Flächenbereich der zu prägenden Sicke ein Formschluss mit der Oberfläche des Werkstückes ausgebildet worden ist. Der Formschluss ist bei dem dargestellten Ausführungsbeispiel um die gesamte Umrisskontur einer Bodensicke 5 umlaufend ausgebildet. Bei dem dargestellten Ausführungsbeispiel wird der Formschluss auf beiden Flachseiten eines Werkstückes ausgebildet.

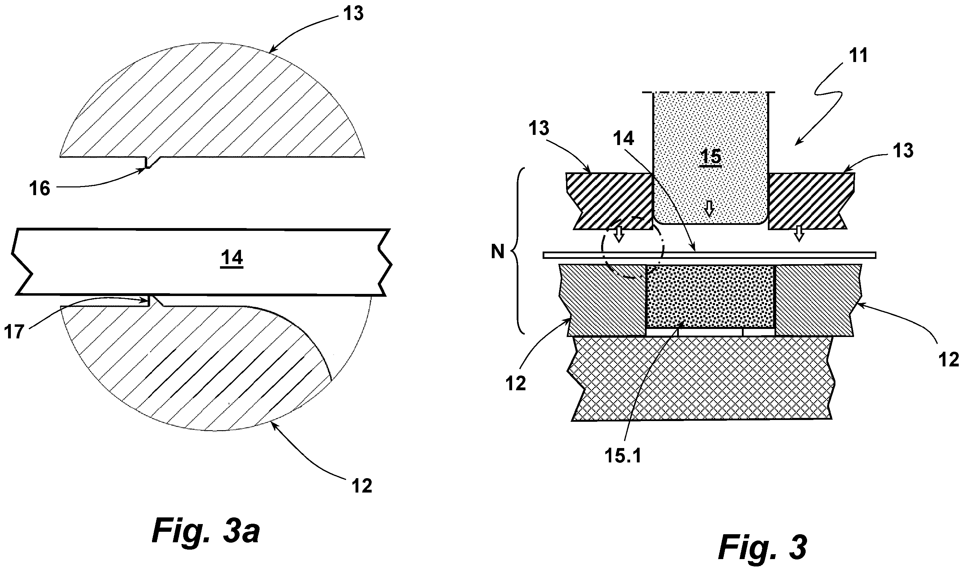

Zum Erstellen der Bodensicken 5 dient eine schematisiert in Figur 3 gezeigte Sickenpresse 11. Die Sickenpresse 11 ist in Figur 3 nur in einem Ausschnitt gezeigt. Die Sickenpresse 11 verfügt über eine der Anzahl der auszubildenden Bodensicken 5 in einer Sektion entsprechende Anzahl an Sickenpresseinheiten, sodass diese in einem Presshub gemeinsam geprägt werden können. Die einzelnen Segmente der Sickenpresse 11 entsprechen dem nachfolgend geschilderten Aufbau anhand des Ausschnittes der Sickenpresse der Figuren 3 und 3a. Die Sickenpresse 11 verfügt über einen Niederhalter N, gebildet durch einen Werkzeugtisch 12 und eine hierzu bewegliche Klemmbacke 13. Durch diesen Niederhalter N wird das platinenartige Werkstück 14 für den Prozess des Einprägens einer Bodensicke 5 fixiert. Die Sickenpresse 11 ist in Figur 3 in ihrer geöffneten Stellung gezeigt. Erst nach Fixieren des Werkstückes 14 durch den Niederhalter N wird mit einem Prägestempel 15 die gewünschte Sickenkontur in das Werkstück 14 eingeprägt. Figur 3a zeigt in einem Detailausschnitt den Niederhalter N, gebildet durch den Werkzeugtisch 12 und die Klemmbacke 13. Die Klemmbacke 13 und der unterseitige Werkzeugtisch 12 verfügen jeweils über eine nach Art einer Kneifkante ausgebildete Formschlusskante 16, 17, durch die die Weite des Klemmspalts zwischen dem Werkzeugtisch 12 und der Klemmbacke 13 verringert wird. Der Formschluss wirkt in Querrichtung und somit in radialer Richtung zu der auszuprägenden Sicke bzw. in Richtung zu dem Prägestempel 15 hin.

Bei diesem Ausführungsbeispiel werden die Formschlusskanten 16, 17 durch eine umlaufende, im Querschnitt asymmetrisch ausgeführte Rippe bereitgestellt. Die Flanke mit der geringeren Neigung gegenüber der übrigen Klemmoberfläche von Werkzeugtisch 12 und Klemmbacke 13 weist in Richtung zu dem in dieser Figur nicht dargestellten Prägestempel 15 der Sickenpresse 11. Damit weist die steilere Flanke in die entgegengesetzte Richtung. Diese Flanke ist für die Ausbildung des vorbeschriebenen Formschlusses verantwortlich und wirkt als Anschlag, wenn in die Oberseiten des Werkstückes 14 eingedrückt. Eine Ausgestaltung eines Niederhalters N, wie zu der Sickenpresse 11 beschrieben, kann mit sehr geringer Kraft in die Oberfläche eines Werkstückes eingedrückt werden, da durch die rippenartigen Formschlusskanten 16, 17 eine Kraftkonzentration stattfindet.

Durch den Formschluss ist wirksam verhindert, dass sich beim anschließenden Prägen einer Bodensicke 5 in einem nennenswerten Maße Material des Werkstückes 14 in die Ausbildung der Bodensicke (Quersicke) einzieht, welches sich außerhalb der Formschlusskanten 16, 17 befindet. Mithin wird in die außerhalb der Formschlusskanten 16, 17 befindlichen Bereiche keine, jedenfalls keine nennenswerte Zugspannung induziert. Jedenfalls ist durch das Einprägen der Formschlusskanten 16, 17 ein Nachfließen von oberflächennahem Material des Werkstückes 14 wirksam verhindert. Dieses begründet die Spannungsfreiheit der außerhalb der Formschlusskanten 16, 17 liegenden Bereiche des Werkstückes 14, da in den einander gegenüberliegenden oberflächennahen Bereichen des Werkstückes 14 kein unterschiedliches Nachfließen stattfinden kann. Damit wird nur Material aus demjenigen Flächenbereich des sich Werkstückes 14 zum Ausbilden der Bodensicke 5 verwendet, welches sich innerhalb der umlaufenden Formschlusskanten 16, 17 befindet. Die Ausprägung der Bodensicke 5 geht einher mit einer Materialverdünnung, wodurch die Verwindungssteifigkeit und Tragfähigkeit der Kabelrinne 1 jedoch nicht beeinträchtigt wird.

Bei der Sickenpresse 11 wirkt der Stempel 15 mit einem Ausheber 15.1 zusammen. Der Ausheber 15.1 befindet sich innerhalb der als unterer Niederhalter ausgebildeten Werkzeugtisches 12.

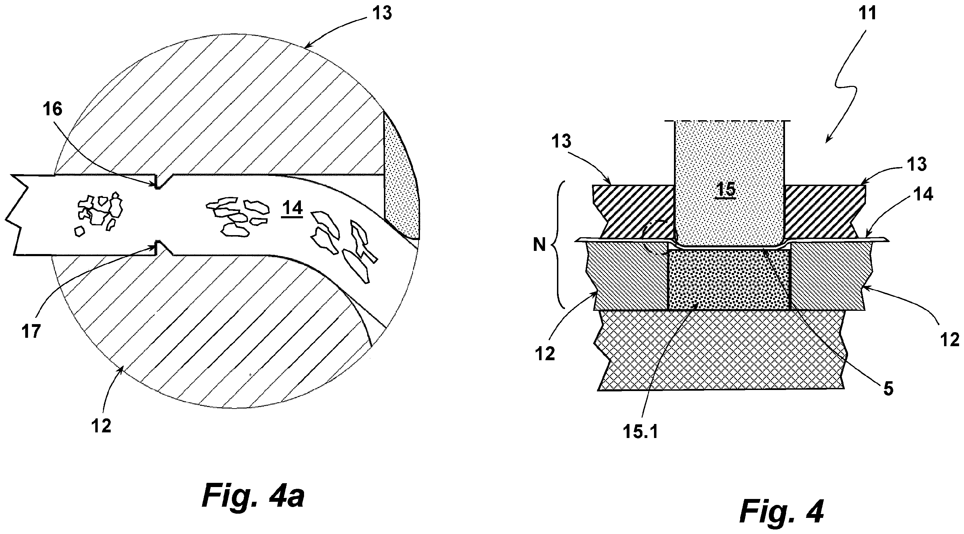

Figur 4 zeigt die Sickenpresse 11 nach Ausüben eines Sickenpresshubes zum Ausbilden einer Bodensicke 5 in dem Werkstück 14, welches den Boden 2 der Kabelrinne 1 bildet. Zum Ausformen der Sicke 5 ist zunächst das Werkstück 14 in dem durch den Werkzeugtisch 12 und die Klemmbacke 13 gebildeten Niederhalter N eingeklemmt worden. Im Zuge dieses Einklemmvorganges sind die Formschlusskanten 16, 17 in die einander gegenüberliegenden Oberflächen des Werkstückes 14 eingedrückt worden (s. auch Figur 4a). Mit den übrigen zueinander weisenden Oberflächen des Niederhalters N ist das Werkstück 14 eingespannt. Erst nachdem das Werkstück 14 in dem Niederhalter N in dieser Weise eingespannt und der in radialer Richtung zu der zu erstellenden Sicke 5 gewünschte Formschluss gebildet ist, erfolgt die eigentliche Ausformung der Bodensicke 5 mit dem Stempel 15. Dieser drückt das Material des Werkstückes 14 in die durch den Werkzeugtisch 12 und den darin aufgenommenen Ausheber 15.1 gebildete Matrize. Im Zuge der Ausprägung der Sicke 5 und dem Eindrücken des die Sicke 5 bildenden Flächenbereiches des Werkstückes 14 in die Matrize nach Art eines Tiefziehens erfolgt in den Bereichen der plastischen Umformung eine Kornlängung. Dieses sind diejenigen Bereiche, in denen eine Materialverdünnung zu beobachten ist. Ein Nachfließen von Material von außerhalb der Formschlusskanten 16, 17 ist durch den Formschluss wirksam verhindert. Die außerhalb der Sicke 5 befindlichen Bereiche sind aus diesem Grunde spannungsfrei.

In der schematisierten Vergößerung der Figur 4a ist die mit dem Ausprägen der Bodensicke 5 einhergehende Längung der Körner schematisiert und stark vergrößert dargestellt. Erkennbar ist, dass die Körner außerhalb des durch die Formschlusskanten 16, 17 bewirkten Formschlusses ihre durch den vorangegangenen Herstellungsprozess typische globulare Form haben. Ist das Werkstück gewalzt, können diese Körner auch eine gestreckte Form aufweisen. Die größte Längung erfahren die Körner durch die Sickenprägung in denjenigen Bereichen, in denen der Stempel 15 auf das Werkstück 14 einwirkt.

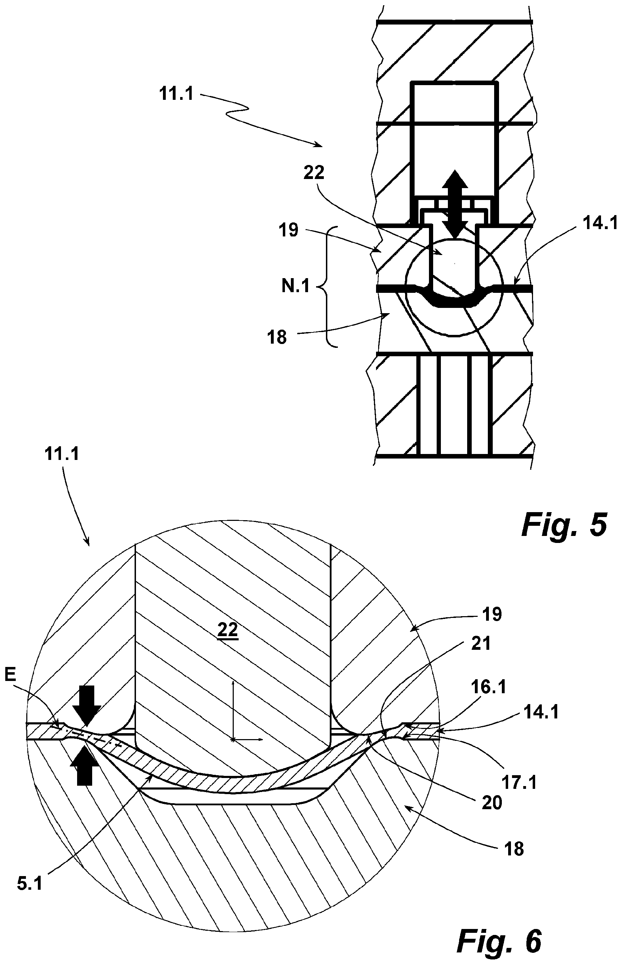

Figur 5 zeigt eine weitere Sickenpresse 11.1, bei der die zu erstellende Quersicke einer Kabelrinne gemäß einem anderen Prinzip ausgebildet wird. Zu der Sickenpresse 11.1 sind gleiche Bauteile wie bei der Sickenpresse 11 mit gleichen Bezugszeichen kenntlich gemacht, ergänzt um den Suffix ".1". Die Ausbildung der Sickenpresse 11.1 ist der Detaildarstellung der Figur 6 besser zu entnehmen.

Die Sickenpresse 11.1 verfügt anstelle eines grundsätzlich ebenen Werkzeugtisches 12 und einer Klemmbacke 13 über zwei miteinander zusammenwirkende Prägewerkzeuge 18, 19. Diese sind Teil jeweils eines Niederhalters N.1. Dabei kann das untere Prägewerkzeug 18, da feststehend, durchaus als Werkzeugtisch angesprochen werden. Die Prägewerkzeuge 18, 19 sind, wie durch die Blockpfeile in Figur 6 kenntlich gemacht, gegeneinander bewegbar. Die Prägewerkzeuge 18, 19 verfügen bei dem dargestellten Ausführungsbeispiel jeweils über einen um die auszuprägende Sicke 5.1 umlaufenden Prägewulst 20, 21, der unter Ausbildung einer Formschlusskante 16.1, 17.1 in Richtung von der auszubildenden Sicke 5.1 wegweisend wirkt. Die von der Sicke 5.1 außerhalb der Formschlusskanten 16.1, 17.1 befindlichen Bereiche des Werkstückes 14.1 sind zwischen den Niederhaltern gehalten. Die Spaltweite zwischen den Prägewerkzeugen 18, 19 ist daher außerhalb der Formschlusskanten 16.1, 17.1 größer als zwischen den Prägewülsten 20, 21. Die Geometrie des Prägespaltes zwischen den Prägewülsten 20, 21 ist in Richtung zu der zu prägenden Sicke 5.1 hin trichterförmig vergrößert. Die Ebene des Prägespaltes ist, in Figur 6 mit dem Bezugszeichen E kenntlich gemacht, gegenüber der horizontalen Ebene des Werkstückes 14.1 in Richtung zu der auszuformenden Sicke 5.1 geneigt. Bewirkt wird hierdurch, dass durch einen Pressenhub das die Sicke 5.1 umlaufend begrenzende Material des Werkstückes 14.1 plastisch umgeformt und in Richtung zu der auszubildenden Sicke 5.1 hin verdrängt wird (s. Figur 6). Die in radialer Richtung erstreckende Länge des Prägespaltes definiert bei der Sickenpresse 11.1 die Breite des einer Materialverdrängung unterworfenen Abschnittes des Werkstückes 14.1. Durch diese Prägewerkzeuge 18, 19 mit ihren Prägewülsten 20, 21 wird somit nicht nur eine Formschlusskante 16.1, 17.1 bereitgestellt, sondern ebenfalls die Ausformung der Sicke 5.1 bewirkt. Die Materialverdünnung führt zu einer Längung des Werkstückabschnittes, der von den Prägewülsten 20, 21 eingefasst ist bzw. auf den diese wirken. Ein Stempel 22 wirkt in diesem Bereich, der sich im Werkzeug in einer Sickenformkavität 23 befindet, auf diejenige Oberseite des Werkstückes 14.1, die von der gewünschten Prägerichtung wegweist. Somit wird durch den Stempel 22 innerhalb der Sickenformkavität die Prägerichtung vorgegeben. Der Stempel 22 ist federbelastet und wird zur Anlage an die Oberseite des Werkstückes 14.1 gebracht, bevor der Prägehub zum Ausformen der Sicke 5.1 durch die zusammenwirkenden Prägewülste 20, 21 vorgenommen wird. Der Sickenprägehub ist anschlagbegrenzt und endet, wenn der Niederhalter N.1 mit ihren Bereichen benachbart zu den Prägewülsten 20, 21 - seinen Klemmabschnitten - auf der jeweiligen Oberfläche des Werkstückes 14.1 aufsetzt.

Bei diesem Ausführungsbeispiel der Sickenpresse 11.1 wird das Material im Ansatzbereich der auszuprägenden Sicke 5 durch Materialverdrängung ausgedünnt und auf diese Weise umgeformt. Die Kornlängung in diesem Bereich ist durch die beidseitige Prägung und die deutlich herbeigeführte Materialverdünnung ausgeprägter als bei der Erstellung einer Sicke mit der Sickenpresse 11.

Vor allem wenn die Prägetiefe der Sicken relativ groß sein soll, ist dieses vorzugsweise mit einer Sickenpresse gemäß der Sickenpresse 11.1 durchzuführen. Die Materialausdünnung zum Bereitstellen der Einprägung in der Werkstückoberfläche erfolgt durch Einpressen der Prägewülste 20, 21 mit der Folge einer Materialverdrängung. Bei der Sickenpresse 11 und dem mit dieser Sickenpresse 11 durchgeführten Verfahren ist die maximale Ausformungstiefe einer Sicke von der Streckgrenze des Werkstückes abhängig. Eine Ausformung einer Sicke über die Streckgrenze des Werkstückes hinaus ist aufgrund der Materialverdrängung mit dem zu der Sickenpresse 11.1 beschriebenen Verfahren möglich. Größere Sickentiefen lassen sich auch mit der Sickenpresse 11 erzielen, wenn die Sicken in sich gelocht sind. Werden diese hingegen mit einer Sickenpresse 11.1 geformt, kann dieselbe Sickentiefe auch ohne notwendig Lochung der Sicken erzielt werden.

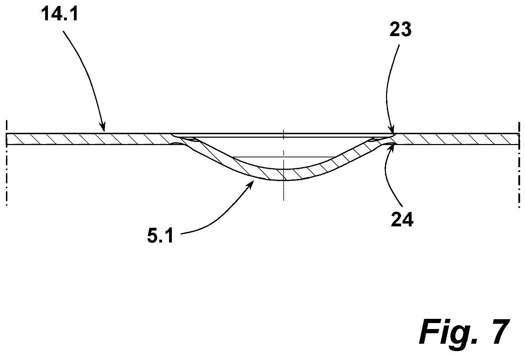

Die Querschnittsdarstellung der Figur 7 zeigt die Bodensicke 5.1, die mit der Sickenpresse 11.1 in das Werkstück 14.1 eingeprägt ist. Deutlich zu erkennen sind die durch die Prägewülste 20, 21 geformte umlaufenden charakteristischen Kanten 23, 24 an der Oberseite bzw. Unterseite des Werkstückes 14.1.

Durch die vorstehend beschriebenen Sickenpressen 11 bzw. 11.1 erhalten die damit hergestellten Bodensicken 5, 5.1 eine an der Kabelrinne 1 erkennbare umlaufende Rille (bei der Sickenpresse 11) bzw. eine umlaufende Kante (bei dem Sickenwerkzeug 11.1).

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen näher erläutert werden müsste.

### Bezugszeichenliste

- 1: Kabelrinne
- 2: Boden
- 3: Seitenholm
- 4: Seitenholm
- 5, 5.1: Bodensicke
- 6: Sektion
- 7: Ausbrechöffnung
- 8: Endabschnitt
- 9: Langloch
- 10: Langloch
- 11, 11.1: Sickenpresse
- 12: Werkzeugtisch
- 13: Klemmbacke
- 14: Werkstück
- 15: Prägestempel
- 15.1: Ausheber
- 16, 16.1: Formschlusskante
- 17, 17.1: Formschlusskante
- 18: Prägewerkzeug
- 19: Prägewerkzeug
- 20: Prägewulst
- 21: Prägewulst
- 22: Stempel
- 23: Kante
- 24: Kante

- E: Ebene
- N, N.1: Niederhalter

## Patentansprüche

1. Verfahren zum Herstellen einer beispielsweise als Kabelrinne (1) oder Kabelrinnendeckel ausgeführten Kabelrinnenkomponente aus Metall mit einer ihrer Längserstreckung folgenden Folge von Sicken (5), die durch einen Prägevorgang in das zum Ausbilden der Kabelrinnenkomponente (1) verwendete Werkstück (14) eingeprägt werden, wobei das Werkstück (14) für den Vorgang des Sickenprägens angrenzend oder im Übergang zu jeder zu erstellenden Sicke (5) in einem Niederhalter (N) eingespannt wird, **dadurch gekennzeichnet, dass** das Werkstück (14) in dem Niederhalter (N) mit einem in radialer Richtung zu der zu erstellenden Sicke (5) wirkenden, durch zumindest eine in die Oberfläche des Werkstückes (14) eingedrückte Formschlusskante (16, 17) bewirkten Formschluss als in die Oberfläche des Werkstückes (14) eingreifende Verkrallung eingespannt wird, wodurch durch den Niederhalter (N) in das Material des Werkstückes (14) zumindest eine dem Verlauf der zu erstellenden Sicke (5) folgende Einprägung eingebracht wird, bevor die Sicke (5) geformt wird.

2. Verfahren nach Anspruch 1, **dadurch gekennzeichnet, dass** die Einprägung umlaufend um den Flächenbereich des Werkstückes (14) ausgebildet wird, in den die Sicke (5, 5.1) eingeprägt wird.

3. Verfahren nach Anspruch 1 oder 2, **dadurch gekennzeichnet, dass** die Einprägung und der damit hergestellte Formschluss durch ein Prägewerkzeug oder ein Prägewerkzeugteil (13) des Niederhalters (N) auf derjenigen Oberfläche des Werkstücks (14) ausgebildet wird, die bei dem Vorgang des Einprägens der Sicke (5) im Übergang zu dieser konvex gekrümmt wird.

4. Verfahren nach Anspruch 1 oder 2, **dadurch gekennzeichnet, dass** die Einprägung durch das Prägewerkzeug oder das Prägewerkzeugteil (12, 13) und dem Werkstück (14) auf beiden Oberflächen des Werkstückes (14) ausgebildet wird.

5. Verfahren nach einem der Ansprüche 1 bis 4, **dadurch gekennzeichnet, dass** die zumindest eine Formschlusskante (16, 17) von der übrigen Klemmoberfläche des Niederhalters (N) mit asymmetrischer Querschnittsfläche abragt.

6. Verfahren nach einem der Ansprüche 1 bis 4, **dadurch gekennzeichnet, dass** die Sickenausformung mit zumindest einem Prägewerkzeug (18, 19) mit jeweils einem Prägewulst (20, 21) durchgeführt wird, mit dem der Sickenrandbereich durch Umformen hinsichtlich seiner Materialstärke reduziert und in Richtung der zu formenden Sicke gelängt wird.

7. Verfahren nach Anspruch 6, **dadurch gekennzeichnet, dass** zwischen den Prägewerkzeugen (18, 19) auf den zwischen den Prägebereichen mit ihrer Formschlusskante (16.1, 17.1) befindlichen Werkstückbereich ein Stempel (22) in derjenigen Richtung wirkt, in die die Ausprägung der Sicke (5.1) erzeugt werden soll.

8. Verfahren nach einem der Ansprüche 1 bis 7, **dadurch gekennzeichnet, dass** die zur Ausbildung des Formschlusses zwischen dem Niederhalter (N) und dem Werkstück (14, 14.1) erzeugte Einprägung mit einer Eindringtiefe ausgeführt wird, die zumindest 5% der Materialstärke des Werkstückes (14, 14.1) entspricht.

9. Verfahren nach Anspruch 8, **dadurch gekennzeichnet, dass** die zur Ausbildung des Formschlusses zwischen dem Niederhalter (N) und dem Werkstück (14, 14.1) erzeugte Einprägung mit einer Eindringtiefe ausgeführt wird, die an jeder Seite des Werkstückes maximal 20 bis 25% der Materialstärke des Werkstückes (14, 14.1) entspricht.

10. Verfahren zum Herstellen einer beispielsweise als Kabelrinne oder Kabelrinnendeckel ausgeführten Kabelrinnenkomponente aus Metall mit einer ihrer Längserstreckung folgenden Folge von Sicken (5.1), die durch einen Prägevorgang in das zum Ausbilden der Kabelrinnenkomponente verwendete Werkstück (14.1) eingeprägt werden, wobei das Werkstück (14.1) für den Vorgang des Sickenprägens angrenzend oder im Übergang zu jeder zu erstellenden Sicke (5.1) in einem Niederhalter (N.1) eingespannt wird, **dadurch gekennzeichnet, dass** zum Erstellen der Sicke (5.1), ihrer Umrissgeometrie folgend, das Werkstück (14.1) in dem Sickenrandbereich über einen sich in radialer Richtung zu der zu erstellenden Sicke (5.1) erstreckenden Abschnitt durch zumindest einen am Niederhalter (N.1) befindlichen Prägewulst (20, 21) in Richtung zu der zu erstellenden Sicke (5.1) hinsichtlich seiner Materialstärke reduziert und damit in Richtung zu der zu formenden Sicke (5.1) gelängt wird.

11. Verfahren nach Anspruch 10, **dadurch gekennzeichnet, dass** der Prägehub zum Ausformen der Sicke (5.1) durch die Klemmflächen des Niederhalters (N.1) anschlagbegrenzt durchgeführt wird.

12. Verfahren nach einem der Ansprüche 1 bis 11, **dadurch gekennzeichnet, dass** mehrere, durch jeweils eine Formschlusskante bewirkte, in Richtung zu der zu erstellenden Sicke wirkende, voneinander in radialer Richtung in Bezug auf die zu erstellende Sicke voneinander beabstandete, in radialer Richtung in Bezug auf die zu erstellende Sicke wirkende Formschlüsse ausgebildet werden.

13. Verfahren nach Anspruch 12, **dadurch gekennzeichnet, dass** durch den Niederhalter in beide Werkstückoberflächen mehrere Einprägungen eingebracht werden, die in radialer Richtung zu der zu erstellenden Sicke versetzt zueinander angeordnet sind.

14. Sickenpresse mit einem Niederhalter (N) zum Herstellen einer Kabelrinnenkomponente (1) aus Metall mit einer ihrer Längserstreckung folgenden Folge von Sicken (5) mit dem Verfahren nach einem der Ansprüche 1 bis 9, **dadurch gekennzeichnet, dass** die Sickenpresse (11) umfasst:
- einen Niederhalter (N) mit einem Werkzeugtisch (12) und einer unter Zwischenschaltung eines Werkstückes (14) gegen den Werkzeugtisch (12) wirkenden Klemmbacke (13), wobei der Werkzeugtisch (12) und die Klemmbacke (13) jeweils eine Formschlusskante (16, 17) zum Ausbilden einer in die Oberfläche des Werkstückes (14) eingreifende Einprägung in dem Werkstück (14) zur Ausbildung eines in radialer Richtung zu der zu erstellenden Sicke (5, 5.1) wirkenden Formschlusses als in die Oberfläche des Werkstückes (14) eingreifende Verkrallung zwischen dem Niederhalter (N) und dem Werkstück (14) für den Vorgang des Sickenprägens aufweisen und
- einen mit einem Ausheber (15.1) zusammenwirkenden Prägestempel (15) zum Einprägen der Sickenkontur in das Werkstück (14), welcher Ausheber sich innerhalb des als unterer Niederhalter ausgebildeten Werkzeugtisches (12) befindet.

15. Sickenpresse mit einem Niederhalter (N.1) zum Herstellen einer Kabelrinnenkomponente aus Metall mit einer ihrer Längserstreckung folgenden Folge von Sicken (5.1) mit dem Verfahren nach Anspruch 10 oder 11, **dadurch gekennzeichnet, dass** der Niederhalter (N.1) zwei miteinander zusammenwirkende Prägewerkzeuge (18, 19) umfasst, die jeweils mit einem Prägewulst (20, 21) ausgerüstet sind, durch den im Zuge eines Prägehubes ein sich in radialer Richtung zu der zu erstellenden Sicke (5.1) erstreckender Abschnitt in Richtung zu der zu erstellenden Sicke (5.1) hinsichtlich seiner Materialstärke reduziert und wodurch in dem Werkstück (14.1) eine Einprägung als Sicke (5.1) ausgebildet wird.

16. Sickenpresse nach Anspruch 15, **dadurch gekennzeichnet, dass** der durch den zumindest einen Prägewulst (20, 21) begrenzte Prägespalt sich in Richtung zu der zu erstellenden Sicke (5.1) trichterartig vergrößert.

## Claims

1. Method for producing a cable tray component which is made of metal and designed, for example, as a cable tray (1) or a cable tray cover, with a sequence of beads (5) along its longitudinal extent, which beads are stamped into the workpiece (14) used to form the cable tray component (1) by means of a stamping process, wherein, for the process of bead stamping, the workpiece (14) is clamped in a hold-down element (N) adjacent to or in the transition to each bead (5) which is to be produced, **characterised in that** the workpiece (14) is clamped in the hold-down element (N) by a form fit which acts in the radial direction towards the bead (5) which is to be created and is produced by at least one form-fitting edge (16, 17) pressed into the surface of the workpiece (14), functioning as a claw engaging into the surface of the workpiece (14), wherein, by means of the hold-down element (N), at least one indentation following the shape of the bead (5) is introduced into the surface of the workpiece (14) before the bead (5) is formed.

2. Method according to claim 1, **characterised in that** the stamp impression is impressed circumferentially around the surface region of the workpiece (14) in which the bead (5, 5.1) is impressed.

3. Method according to claim 1 or 2, **characterised in that** the stamping process and the form fit produced by it are formed by a stamping tool or a stamping tool part (13) of the hold-down element (N) on that surface of the workpiece (14) which, during the process of the stamping of the bead (5) is convex curved in the transition to the bead.

4. Method according to claim 1 or 2, **characterised in that** the stamping by the stamping tool or stamping tool part (12, 13) and the workpiece (14) are formed on both surfaces of the workpiece (14).

5. Method according to any one of claims 1 to 4, **characterised in that** the at least one form-fitting edge (16, 17) projects from the rest of the clamping surface of the hold-down element (N) with asymmetrical cross-section surface.

6. Method according to any one of claims 1 to 4, **characterised in that** the bead forming is carried out with at least one stamping tool (18, 19), in each case with a stamping bulge (20, 21), with which the bead edge region is reduced by forming with regard to its material thickness, and lengthened in the direction of the bead which is to be formed.

7. Method according to claim 6, **characterised in that** a punch (22) takes effect between the stamping tools (18, 19) on the workpiece region located between the stamping regions with its form-fitting edge (16.1, 17.1) in the direction in which it is intended that the stamping of the bead (5.1) is to be produced.

8. Method according to any one of claims 1 to 7, **characterised in that** the stamping produced in order to create the form fit between the hold-down element (N) and the workpiece (14, 14.1) is carried out with a penetration depth which corresponds to at least 5% of the material thickness of the workpiece (14, 14.1).

9. Method according to claim 8, **characterised in that** the stamping produced in order to create the form fit between the hold-down element (N) and the workpiece (14, 14.1) is carried out with a penetration depth which corresponds on each side of the workpiece a maximum of 20 to 25% of the material thickness of the workpiece (14, 14.1).

10. Method for producing a cable tray component made of metal, configured such as a cable tray or a cable tray cover, with a sequence of beads (5.1) following its longitudinal extension, which are stamped by means of a stamping process into the workpiece (14.1) which is used to form the cable tray component, wherein, for the process of bead stamping, the workpiece (14.1) is clamped in a hold-down element (N.1) adjacent to, or in the transition to, each of the beads (5.1) which is to be produced, **characterised in that,** for the production of the bead (5.1), and following its profile geometry, the workpiece (14.1) is reduced in its material thickness in the bead edge region by means of a section extending in the radial direction of the bead (5.1) which is to be produced, by means of at least one stamping bulge (20, 21) located at the hold-down element (N. 1) in the direction of the bead (5.1) which is to be produced, and is therefore lengthened in the direction of the bead (5.1) which is to be formed.

11. Method according to claim 10, **characterised in that** the stamping stroke movement for forming the bead (5.1) is carried out with its contact limited by the clamping surfaces of the hold-down element (N.1).

12. Method according to any one of claims 1 to11, **characterised in that** several form fits are created, in each case by a form-fitting edge, taking effect in the direction of the bead which is to be produced and spaced apart from one another in the radial direction in relation to the bead which is to be produced, and taking effect in the radial direction in the radial direction of the bead which is to be produced.

13. Method according to claim 12, **characterised in that** several punch impressions are introduced by the hold-down element in both workpiece surfaces, which are arranged offset to one another in the radial direction towards the bead which is to be produced.

14. Bead press with a hold-down element (N) for producing a cable tray component (1) made of metal, with a sequence of beads (5) following its longitudinal extension with the method according to any one of claims 1 to 9, **characterised in that** the bead press (11) comprises:
- a hold-down element (N) with a tool table (12) and a clamping chuck (13) taking effect with the intermediate engagement of a workpiece (14) against the tool table (12), wherein the tool table (12) and the clamping chuck (13) in each case comprise a form-fitting edge (16, 17) for forming in the workpiece (14) a stamping action, engaging into the surface of the workpiece (14), so as to create a form fit taking effect in the radial direction towards the bead (5, 5.1) which is to be produced, by way of a claw engaging into the surface of the workpiece (14) between the hold-down element (N) and the workpiece (14) for the process of stamping the bead, and
- a stamping punch (15) interacting with a lifting device (15.1) for stamping the bead contour into the workpiece (14), this lifting device being located inside the tool table (12) formed as a lower hold-down element.

15. Bead press with a hold-down element (N.1) for producing a cable tray component made of metal, with a sequence of beads (5.1) following its longitudinal extension, with the method according to claim 10 or 11, **characterised in that** the hold-down element (N.1) comprises two interacting stamping tools (18, 19), which in each case are provided with a stamping bulge (20, 21), by means of which the section which, in the course of a stamping stroke movement, extending in the radial direction towards the bead (5.1) which is to be produced, is reduced in the direction towards the bead (5.1) which is to be reduced with regard to its material thickness, and, as a result of which, a stamping effect is formed as a bead (5.1) in the workpiece (14.1).

16. Bead press according to claim 15, **characterised in that** the stamping gap delimited by the at least one stamping bulge (20, 21) is enlarged in the form of a funnel in the direction of the bead (5.1) which is to be produced.

## Revendications

1. Procédé pour produire un composant de chemin de câbles réalisé par exemple en tant que chemin de câbles (1) ou couvercle de chemin de câbles, constitué de métal, comportant une suite de moulures (5) suivant son étendue longitudinale, qui sont empreintes dans la pièce à usiner (14) utilisé pour configurer le composant de chemin de câbles (1) au cours d'un processus d'estampage, pendant lequel processus d'estampage des moulures la pièce à usiner (14) étant maintenue par un serre-flanc (N) dans la zone voisine ou de transition de chaque moulure (5) à réaliser, **caractérisé en ce que** la pièce à usiner (14) est maintenue dans le serre-flanc (N) par une complémentarité de forme, agissant dans le sens radial par rapport à la moulure (5) à réaliser, au moyen d'au moins une arête (16, 17) de complémentarité de forme enfoncée dans la surface de la pièce à usiner (14), comme une griffe qui s'engagerait dans la surface de la pièce à usiner (14), le serre-flanc (N) réalisant ainsi dans le matériau de la pièce à usiner (14), avant la mise en forme de la moulure (5), au moins une empreinte qui suit le tracé de la moulure (5) à réaliser.

2. Procédé selon la revendication 1, **caractérisé en ce que** l'empreinte est réalisée de manière périphérique, autour de la zone de surface de la pièce à usiner (14) dans laquelle la moulure (5, 5.1) sera estampée.

3. Procédé selon la revendication 1 ou 2, **caractérisé en ce que** l'empreinte et la complémentarité de forme réalisée à la même occasion est réalisée par un outil d'estampage ou par une partie d'outil d'estampage (13) du serre-flanc (N) sur la surface de la pièce à usiner (14) qui sera, au cours du processus d'estampage de la moulure (5), déformée de manière convexe dans la transition avec cette dernière.

4. Procédé selon la revendication 1 ou 2, **caractérisé en ce que** l'empreinte laissée par l'outil d'estampage ou la partie d'outil d'estampage (12, 13) sur la pièce à usiner (14) est réalisée sur les deux surfaces de la pièce à usiner (14).

5. Procédé selon l'une des revendications 1 à 4, **caractérisé en ce que** l'au moins une arête (16, 17) de complémentarité de forme est en saillie par rapport au reste de la surface de serrage du serre-flanc (N) avec une section transversale asymétrique.

6. Procédé selon l'une des revendications 1 à 4, **caractérisé en ce que** la mise en forme de la moulure est réalisée avec au moins un outil d'estampage (18, 19), comportant respectivement un bourrelet d'estampage (20, 21), par lequel l'épaisseur du matériau de la zone périphérique de la moulure est réduite par la mise en forme et allongée en direction de la moulure à former.

7. Procédé selon la revendication 6, **caractérisé en ce qu'**un poinçon (22) agit, entre les outils d'estampage (18, 19), sur la zone de la pièce à usiner se trouvant entre les zones à estamper avec leur arête (16.1, 17.1) de complémentarité de forme, dans le sens dans lequel l'estampage de la moulure (5.1) doit être réalisé.

8. Procédé selon l'une des revendications 1 à 7, **caractérisé en ce que** l'empreinte réalisée afin de configurer la complémentarité de forme entre le serre-flanc (N) et la pièce à usiner (14, 14.1) est conformée avec une profondeur de pénétration qui correspond à au moins 5% de l'épaisseur du matériau de la pièce à usiner (14, 14.1).

9. Procédé selon la revendication 8, **caractérisé en ce que** l'empreinte réalisée afin de configurer la complémentarité de forme entre le serre-flanc (N) et la pièce à usiner (14, 14.1) est conformée avec une profondeur de pénétration qui correspond sur chaque côté de la pièce à usiner au maximum à 20 à 25 % de l'épaisseur du matériau de la pièce à usiner (14, 14.1).

10. Procédé pour produire un composant de chemin de câbles réalisé par exemple en tant que chemin de câbles ou couvercle de chemin de câbles, constitué de métal, comportant une suite de moulures (5.1) suivant son étendue longitudinale, qui sont empreintes, au cours d'un processus d'estampage, dans la pièce à usiner (14.1) utilisée pour configurer le composant de chemin de câbles (1), pendant lequel processus d'estampage des moulures, la pièce à usiner (14.1) étant maintenue par un serre-flanc (N.1) dans la zone voisine ou de transition de chaque moulure (5.1) à réaliser, **caractérisé en ce que,** pour réaliser la moulure (5.1) en suivant sa géométrie de contour, la pièce à usiner (14.1) est réduite au niveau de l'épaisseur de son matériau dans la zone périphérique de la moulure, sur un tronçon s'étendant dans le sens radial par rapport à la moulure (5.1) à réaliser, par au moins un bourrelet d'estampage (20, 21) se trouvant sur le serre-flanc (N.1), en direction de la moulure (5.1) à réaliser et qu'elle est donc allongée en direction de la moulure (5.1) à former.

11. Procédé selon la revendication 10, **caractérisé en ce que** la levée d'estampage pour former la moulure (2.1) est exécutée avec une limite de butée par les surfaces de serrage du serre-flanc (N.1).

12. Procédé selon l'une des revendications 1 à 11, **caractérisé en ce que** plusieurs complémentarités de forme sont configurées en agissant dans le sens radial par rapport à la moulure à réaliser, à distance les unes des autres dans le sens radial par rapport à la moulure à réaliser, agissant vers la moulure à réaliser, chacune grâce aux effets d'une arête de complémentarité de forme.

13. Procédé selon la revendication 12, **caractérisé en ce que** le serre-flanc réalise dans les deux surfaces de la pièce à usiner plusieurs empreintes, disposées en quinconce dans le sens radial par rapport à la moulure à réaliser.

14. Presse à moulure comportant un serre-flanc (N) pour produire un composant de chemin de câbles (1) constitué de métal, comportant une suite de moulures (5) suivant son étendue longitudinale, au moyen du procédé selon l'une des revendications 1 à 9, **caractérisée en ce que** la presse à moulure (11) comprend :
- un serre-flanc (N) avec un plateau porte-outil (12) et une mâchoire de serrage (13) agissant contre le plateau porte-outil (12) par l'intermédiaire d'une pièce à usiner (14), le plateau porte-outil (12) et la mâchoire de serrage (13) présentant respectivement une arête de complémentarité de forme (16, 17) afin de réaliser une empreinte dans la pièce à usiner (14) qui s'enfonce dans la surface de la pièce à usiner (14), afin de réaliser une complémentarité de forme agissant dans le sens radial de la moulure à réaliser (5, 5.1) comme une griffe qui s'engagerait dans la surface de la pièce à usiner (14), entre le serre-flanc (N) et la pièce à usiner (14) pour le procédé d'estampage de moulure et
- avec un poinçon (15) agissant conjointement avec un démouleur (15.1) destiné à empreindre le contour de moulure dans la pièce à usiner (14), lequel démouleur se trouve logé à l'intérieur du plateau porte-outil (12) conformé en tant que serre-flanc inférieur.

15. Presse à moulure comportant un serre-flanc (N.1) pour produire un composant de chemin de câbles (1) constitué de métal, comportant une suite de moulures (5) suivant son étendue longitudinale, au moyen du procédé selon la revendication 10 ou 11, **caractérisée en ce que** le serre-flanc (N.1) comprend deux outils d'estampage (18, 19) agissant conjointement l'un avec l'autre, lesquels sont respectivement équipés d'un bourrelet d'estampage (20, 21), par lequel, dans le cadre de la levée d'estampage, un tronçon s'étendant dans le sens radial par rapport à la moulure (5.1) à réaliser est réduit au niveau de son épaisseur de matériau vers la moulure (5.1) à réaliser et au terme duquel, une empreinte sous la forme d'une moulure (5.1) est produite dans la pièce à usiner (14.1).

16. Presse à moulure selon la revendication 15, **caractérisée en ce que** la fente d'estampage limitée par au moins un bourrelet d'estampage (20, 21) s'agrandit à la manière d'un entonnoir en direction de la moulure (5.1) à réaliser.
